# EUROPEAN PATENT APPLICATION

(11) **EP 2 536 138 A1**
(43) Date of publication of application: **19.12.2012**
(21) Application number: 10845547.8
(22) Date of filing: 17.08.2010
(51) Int. Cl.: H04N 7/16

(54) **TERMINAL AND TELEVISION SERVICE PLAYING METHOD THEREOF**

(30) Priority: 11.02.2010 CN 201010111477
(71) Applicant: ZTE Corporation, Shenzhen, Guangdong 518057 (CN)
(72) Inventor: HUANG, Li, Shenzhen Guangdong 518057 (CN)
(74) Representative: Ilgart, Jean-Christophe
(86) International application number: PCT/CN2010/076080
(87) International publication number: WO 2011/097877

(57) **Abstract**

The present invention discloses a terminal and television service playing method thereof, wherein, the method comprises the following steps: the terminal obtaining a service key from a service platform; the terminal accepting a program selection from a user; and the terminal using the obtained service key to play a program selected by the user. The present invention ensures that a valid service key has been locally stored when a user selects a program to play, thus the response speed for playing an encrypted program is accelerated, and the user experience is enhanced.

## Description

### Field of the Invention

The present invention relates to the communication field, and more particularly to a terminal and a television service playing method of a terminal.

### Background of the Invention

In the communication technology it has become a more and more normal demand of the client to maintain the security of transmitted information. Encryption in the communication technology mainly helps to protect users' identifiers or data from being read, protects data from being changed and ensures that data are sent from a specific party. To sum up, encryption shall meet the requirements of confidentiality, data integrity and identity authentication.

In a mobile television service, a service key is used to encrypt a program key. The service key is usually obtained through two modes: in a PULL mode, if there is no service key when a user is playing a program, the service key is obtained and stored through the information interaction between a network platform and a card; in a PUSH mode, when the network platform is pushing a service key, a terminal is triggered, by means of the notification of a short message, to conduct the service key obtaining procedure.

At present, the update mechanism of the service key adopts a combination of the mode that the network pushes the service key positively and the mode that the client/terminal requests to obtain the service key The client/terminal obtains a service key through one of the following three modes.
(1) The client/terminal obtains a service key during subscription procedure. Specifically, after a user subscribes to a certain channel/program, the network platform will authenticate the user during the subscription procedure; if the authentication is passed, the service key will be sent to the client/terminal in a subscription response message and then forwarded to a user authentication module by the client/terminal.
(2) If the client/terminal finds that there is no service key locally when playing a program, it will obtain a service key positively from the platform. Specifically, the client/terminal judges whether a valid service key is locally stored; if no valid one is locally stored, the client/terminal will check a subscription relation sheet to judge whether the user subscribes to the service, if the user has subscribed to the service, the client/terminal will start the procedure of sending the request for a service key to the network. Besides, the client/terminal also supports to request multiple service keys in one message.
(3) The mode that the service platform pushes a service key positively: after a user subscribes to a certain channel/program, the platform will inform the user with a PUSH message at a proper time and trigger the terminal to start the service key obtaining procedure.

From the user's perspective, it is unlikely for the user to conduct the related operation of subscription and cancellation of subscription, so the probability of obtaining the service key during subscription is not high Besides, for example, data cards and netbooks are generally re-powered up at least once per day, such re-power-up will make the service key stored before invalid. For a mobile terminal, the service key will also become invalid when it enters into the mobile television after startup from shutdown once It is impossible to obtain the service key through cancelling the subscription first and then conducting subscription each time entering the service. Therefore, in most cases, the client/terminal starts the service key obtaining procedure to the platform positively when playing a program in practical applications.

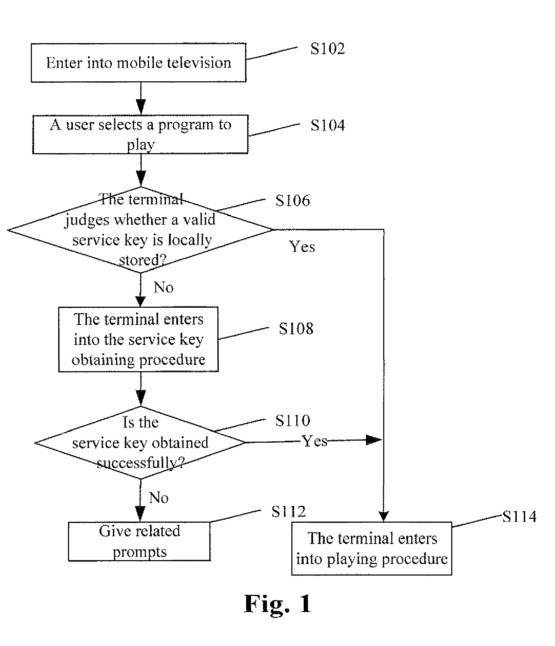

Fig. 1 is a flow chart that a terminal plays an encrypted program according to related technologies, and the flow comprises the steps below:
Step S102, in response to an operation instruction of a user for entering into a mobile television service, a terminal starts and initializes a television service;
Step S401, the terminal accepts a program selection from a user and plays the program selected by the user;
Step S106, the terminal will judge whether a valid service key is locally stored, if there is such a service key, execute Step S 114; if there is no valid service key execute Step S108;
Step S108, the terminal enters into the service key obtaining procedure;
Step S110, after a period of authentication interaction, judge whether the service key is successfully obtained, if so, jump to Step S114; otherwise, execute Step S112;
Step S 112, the terminal gives related prompts; and
Step S114, the terminal plays the program directly.

According to the procedure above, in Step S106, if it is determined that there is the service key, then execute Step S114 directly this procedure takes about 1.5 seconds, equal to the time for entering into playing an unencrypted program; if it is determined that there is no valid service key, then execute Step S114 to play a program, this procedure takes about 10 seconds, obviously longer than the 1.5 seconds above.

Therefore, in related technology, the service key obtaining procedure is between the procedure that the user selects a program to be played and the start of playing the program, which will prolong the time for entering into playing, affecting the user experience.

In addition, the handling of free channels shall be taken into consideration. The platform will distribute the service key positively to the terminal having access to the service, and the service key is distributed together with the subscription relation sheet. If the platform fails in the distribution of the service key (the service key is not sent to the terminal), the terminal will still need to obtain a service key from the platform when playing the free program. In this way, the same problem still exists.

### Summary of the Invention

The present invention mainly provides a terminal and a television service playing method of a terminal, which solves the problem above.

According to one aspect of the present invention, a television service playing method of a terminal is provided, comprising: the terminal obtaining a service key from a service platform; the terminal accepting a program selection from a user; and the terminal using the obtained service key to play a program selected by the user.

Preferably, the step of obtaining the service key from the service platform by the terminal comprises: the terminal starting up the television service and obtaining the service key during the startup.

Preferably, the terminal obtains the service key from the service platform before the terminal starts up the television service.

Preferably, the step of obtaining the service key from the service platform by the terminal comprises: the terminal obtaining a subscription relation of the user from the service platform, wherein the subscription relation comprises a corresponding relation between a service key identifier and the service key; the terminal using the service key identifier in the subscription relation to obtain the service key corresponding to the service key identifier from the service platform; and the terminal storing the obtained service key locally

Preferably, the step of using the service key identifier in the subscription relation to obtain the service key corresponding to the service key identifier from the service platform by the terminal comprises: the terminal sending a service key obtaining request message to the service platform, wherein the service key obtaining request message comprises service key identifiers of multiple television program packages and/or free television programs; and the terminal receiving service keys of the multiple television program packages and/or free television programs corresponding to the service key identifiers of the multiple television program packages and/or free television programs sent back by the service platform.

Preferably, after the step of storing the obtained service key locally by the terminal, the method further comprises: for the service key with confirmation identification made by the service platform in the obtained service key, the terminal making confirmation with the service platform.

According to another aspect of the present invention, a terminal is provided, comprising: a service key obtaining module, configured to obtain a service key from a service platform; an accepting module, configured to accept a program selection from a user; and a playing module, configured to use the obtained service key to playa program selected by the user.

Preferably, the terminal further comprises: a startup module, configured to start up the television service; wherein, the service key obtaining module obtains the service key during a process that the startup module starts up the television service, or obtains the service key from the service platform before the startup module starts up the television service.

Preferably, the service key obtaining module comprises: a first obtaining unit, configured to obtain a subscription relation of the user from the service platform, wherein the subscription relation comprises a corresponding relation between a service key identifier and the service key; a second obtaining unit, configured to use the service key identifier in the subscription relation to obtain the service key corresponding to the service key identifier from the service platform; and a storing unit, configured to store the obtained service key locally.

Preferably, the second obtaining unit further comprises: a sending subunit, configured to send a service key obtaining request message to the service platform, where the service key obtaining request message comprises service key identifiers of multiple television program packages and/or free television programs; and a receiving subunit, configured to receive service keys of multiple television program packages and/or free television programs corresponding to the service key identifiers of multiple television program packages and/or free television programs sent back by the service platform.

Through the present invention, the service key is obtained in advance before the terminal accepts a program selection from a user and plays the program selected by the user, which solves the problem of relatively long time for entering into playing in the prior art, thus ensuring a valid service key has been locally stored when a user selects a program to play, the response speed for playing an encrypted program is accelerated, and the user experience is enhanced.

### Brief Description of the Drawings

The accompanying drawings disclosed herein, constituting a part of the application, are provided for further understanding the present invention. The exemplary embodiments of the present invention and the description thereof are used to illustrate rather than limit the present invention. Wherein:
Fig. 1 is a flow chart that a terminal plays an encrypted program according to related technologies;
Fig. 2 is a schematic diagram of the terminal according to an embodiment of the present invention;
Fig. 3 is a schematic diagram of the service key obtaining module according to an embodiment of the present invention;
Fig. 4 is a flow chart of the television service playing method of the terminal according to an embodiment of the present invention;
Fig. 5 is a detailed flow chart of the television service playing according to a preferable Embodiment I of the present invention; and
Fig. 6 is a detailed flow chart of the television service playing according to a preferable Embodiment II of the present invention.

### Detailed Description of the Embodiments

The present invention will be further illustrated hereinafter in conjunction with the accompanying drawings and the embodiments. It shall be noted that the embodiments in the application and the characteristics in the embodiments can be mutually combined if no conflict occurs.

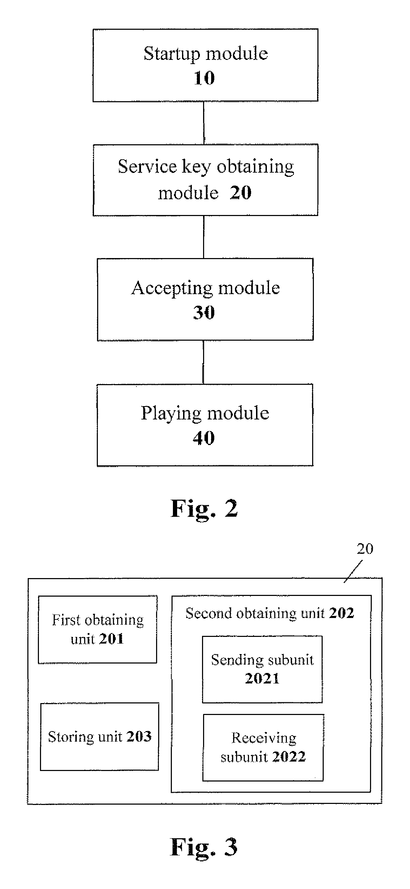

Fig. 2 is a schematic diagram of the terminal according to an embodiment of the present invention, and the terminal comprises:
a service key obtaining module 20, configured to obtain a service key from a service platform;
an accepting module 30, configured to accept a program selection from a user; and
a playing module 40, configured to use the obtained service key to play the program selected by the user.

Since the service key is obtained in advance before the terminal accepts a program selection from a user and plays the program selected by the user, the embodiment solves the problem of relatively long time for entering into playing, thus ensuring a valid service key has been locally stored when a user selects a program to play, the response speed for playing an encrypted program is accelerated, and the user experience is enhanced.

Preferably, the terminal above also comprises a startup module 10 which is configured to start up the television service;
wherein, the service key obtaining module 20 obtains the service key during the process that the startup module 10 starts up the television service.

In the embodiment, the obtaining of the service key is conducted by the terminal in advance. i.e. in the process of the startup (namely initialization) of the television service, which solves the problem of relatively long time for entering into playing, thus ensuring a valid service key has been locally stored when a user selects a program to play, the response speed for playing an encrypted program is accelerated, and the user experience is enhanced.

Alternatively, the terminal above preferably further comprises:
a startup module 10, configured to start up the television service;
wherein, the service key obtaining module 20 obtains the service key from the service platform before the startup module 10 starts up the television service.

In the embodiment, the obtaining of the service key is in advance of the startup (namely initialization) of the television service, which solves the problem of relatively long time for entering into playing, thus ensuring a valid service key has been locally stored when a user selects a program to play, the response speed for playing an encrypted program is accelerated, and the user experience is enhanced.

As shown in Fig. 3, in a preferable embodiment, the service key obtaining module 20 comprises:
a first obtaining unit 201, configured to obtain a subscription relation of the user from the service platform, wherein the subscription relation comprises a corresponding relation between a service key identifier and the service key;
a second obtaining unit 202, configured to use the service key identifier in the subscription relation to obtain the service key corresponding to the service key identifier from the service platform; and
a storing unit 203, configured to store the obtained service key locally

The preferable embodiment provides an implementation solution of the service key obtaining module of the terminal obtaining a service key during the initialization of the television service. The terminal updates the subscription relation sheet through the interaction with the service platform, so as to obtain the service keys of television programs subscribed to by the user and free television programs, according to the service key identifiers of television programs of respective channels (comprising free television programs) or respective television program packages in the updated subscription relation sheet.

The second obtaining unit 202 comprises:
a sending subunit 2021, configured to send a service key obtaining request message to the service platform, wherein the service key obtaining request message comprises the service key identifiers of multiple television program packages and/or free television programs; and
a receiving subunit 2022, configured to receive the service keys of multiple television program packages and/or free television programs corresponding to the service key identifiers of multiple television program packages and/or free television programs sent back by the service platform.

Comparing with the method in related technologies that only one television program package or one channel can be obtained at one time, in the preferable embodiment, since the obtaining of service keys by the service key obtaining module is advanced, namely the service keys are obtained in advance, multiple television program packages (comprising free channels) can be put in one service key obtaining request message to conduct request. Therefore, the terminal can obtain the service keys of multiple television program packages at one time.

The terminal can be a data card or a netbook, etc., or mobile terminals, such as mobile phones.

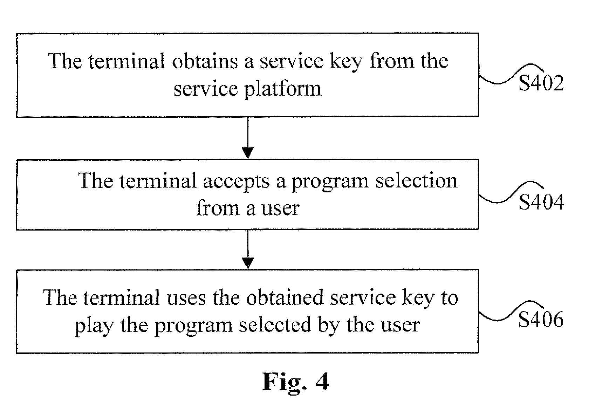

Fig. 4 shows the television service playing method of the terminal according to an embodiment of the present invention, and the method comprises the steps below:
Step S402, the terminal obtains a service key from the service platform;
Step S404, the terminal accepts a program selection from a user; and
Step S406, the terminal uses the obtained service key to play the program selected by the user.

Since the service key is obtained before the terminal accepts a program selection from a user and plays the program selected by the user, the embodiment solves the problem of relatively long time for entering into playing, thus ensuring a valid service key has been locally stored when a user selects a program to play, the response speed for playing an encrypted program is accelerated, and the user experience is enhanced.

Preferably, Step S402 comprises: the terminal starts up the television service and obtains the service key during the startup.

In the embodiment, the obtaining of the service key is conducted in advance, i.e. in the process of the startup (namely initialization) of the television service, which solves the problem of relatively long time for entering into playing and make the play response time free from influences, thus ensuring a valid service key has been locally stored when a user selects a program to play, the response speed for playing an encrypted program is accelerated, and the user experience is enhanced.

Alternatively, in Step S402, the terminal preferably obtains a service key from the service platform before the terminal starts up the television service.

In the embodiment, the obtaining of the service key is in advance of the startup (namely initialization) of the television service, which solves the problem of relatively long time for entering into playing and make the play response time free from influences, thus ensuring a valid service key has been locally stored when a user selects a program to play, the response speed for playing an encrypted program is accelerated, and the user experience is enhanced. In addition, the preferable embodiment has no effect on other flows of the playing of the television service and the user experience is better

In the method above, the step that the terminal obtains the service key from the service platform comprises: the terminal obtains a subscription relation of the user from the service platform, wherein the subscription relation comprises a corresponding relation between a service key identifier and the service key; the terminal uses the service key identifier in the subscription relation to obtain the service key corresponding to the service key identifier from the service platform; and the terminal stores the obtained service key locally

In this way, the terminal can obtain the service keys of the television programs subscribed to by the users and free television programs according to the service key identifiers of respective television programs of channels (comprising free television programs) or respective television program packages in the obtained subscription relation sheet of the user. The accuracy for obtaining of the service keys is high. Wherein, the terminal receives the service keys sent back by the service platform, stores and updates the service keys into the smart card or integrated module of the terminal.

The step that the terminal uses the service key identifier in the subscription relation to obtain the service key corresponding to the service key identifier from the service platform comprises: the terminal sends a service key obtaining request message to the service platform, wherein the service key obtaining request message comprises the service key identifiers of multiple television program packages and/or free television programs; and the terminal receives the service keys of the multiple television program packages and/or free television programs corresponding to the service key identifiers of the multiple television program packages and/or free television programs sent back by the service, platform.

In the preferable embodiment, since the obtaining of service keys by the service key obtaining module is advanced, namely the service keys are obtained in advance, multiple television program packages (comprising free channels) can be put in one service key obtaining request message to conduct request. Therefore, the terminal can obtain the service keys of multiple television program packages at one time. It solves the problem in related technologies that only one obtaining television program or one channel can be obtained at one time.

Preferably, after the terminal stores the obtained service key locally, the method further comprises: for the service key with confirmation identification (used to indicate the terminal to make confirmation with the service platform for the service key) made by the service platform in the obtained service key, the terminal shall initiate a confirmation flow to the service platform for confirmation. For the service key requiring confirmation identified by the service platform, the terminal shall initiate a confirmation flow to the service platform for confirmation after receiving and storing the service key

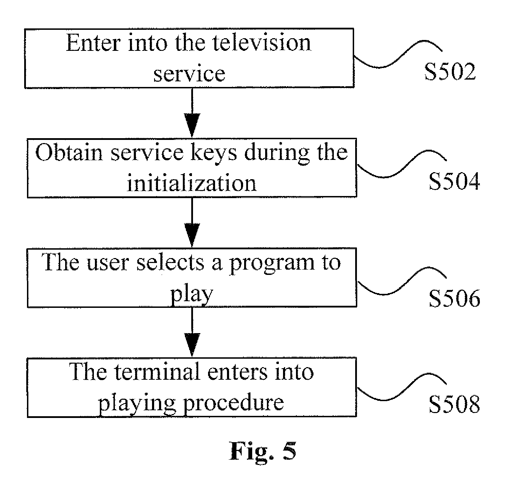

Fig. 5 is a detailed flow chart of the television service playing according to a preferable Embodiment I of the present invention, where the service key obtaining procedure is put in the initialization of the television service The flow comprises the steps below.
Step S502, the terminal enters into the television service (for example, mobile television) after receiving the instruction, which is generated by the user through operation, of entering into the television service.
Step S504, a service key obtaining request is initiated in the background of the assembly module during the initialization of the television service. Specifically, after the subscription relation of the user is obtained during the initialization of the television service, the terminal initiates the service key obtaining procedure positively according to the service key identifier in the subscription relation and stores the obtained service key locally (for example, stores and updates them in the smart card or integrated module).

Wherein, for the service key requiring confirmation identified by the service platform, the terminal shall initiate a confirmation flow to the service platform for confirmation after receiving and storing the service key
Step S506, the user selects a program to play
Step S508, since a valid service key has been locally stored, directly entering into playing procedure can realize prompt playing, which can effectively shorten the time required by playing.

All in all, pre-obtaining the service key can solve the problem of slow playing response caused by that the service key obtaining procedure is initiated after the query of the subscription relation due to the invalid service key, thereby enhancing the user experience.

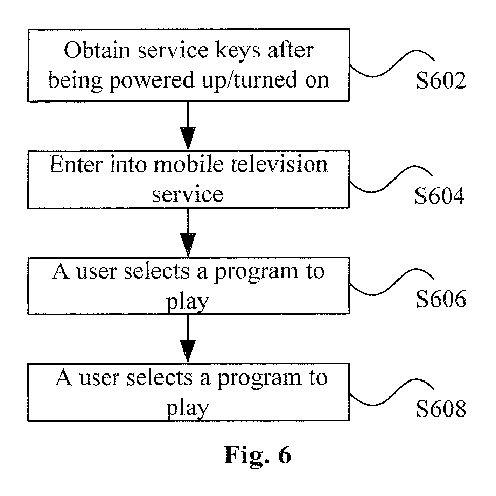

Fig. 6 is a detailed flow chart of the television service playing according to a preferable Embodiment II of the present invention, where the service key obtaining procedure is put before entering into the television service The flow comprises the steps below.
Step S602, before mobile phones enter into mobile television service after being powered up, or before data cards/netbooks enter into mobile television service after being powered up, the terminal obtains the subscription relation of the user, initiates a service key obtaining request in the background according to the service key identifier in the subscription relation, and stores the obtained service key locally (for example, stores and updates them in the smart card or integrated module of the terminal.

Wherein, for the service key requiring confirmation identified by the service platform, the terminal shall initiate a confirmation flow to the service platform for confirmation after receiving and storing the service key
Step S604, the terminal enters into the television service after receiving the instruction, which is generated by the user through operation, of entering into the television service.
Step S606, a user selects a program to play
Step S608, directly enter into playing procedure since a valid service key has been locally stored. Comparing with Embodiment I above, the solution has no effect on other procedures, and the user experience is better.

In Embodiment I and II, since service keys are obtained in advance, the service keys of multiple packages can be obtained simultaneously by putting multiple television program packages and free channels in one request message. Thus, the service keys of multiple television programs can be obtained simultaneously, thereby improving the obtaining efficiency of the service keys and further shortening the time required by obtaining service keys, and solving the problem in related technologies that the service key can be obtained only for one package or channel in the subscription or playing.

From the description above, it can be concluded that the embodiments of the present invention realizes the technical effects below:
(1) ensuring that a valid service key has been locally stored when playing, thus the response speed for playing an encrypted program is accelerated, and the user experience is enhanced;
(2) the service keys of multiple television programs can be obtained simultaneously, improving the obtaining efficiency of service keys and further shortening the time required by obtaining the service keys.

It is obvious for the person skilled in this art that, the modules or steps of the present invention above can be also realized by a general computer device. They can be integrated in a single computer device or distributed on the network composed of several computer devices, or alternatively achieved by executable codes of a computer device, so as to store them in a storage unit for execution by a computer device, or make them into different integrated circuit modules or make multiple modules or steps of them to a single integrated circuit module for realization of the present invention In this way, the present invention is not restricted to the combination of any specific hardware and software.

The description above is just the preferable embodiments of the present invention, and is not used to limit the present invention. For those skilled in this art, the present invention can have various alterations and changes. Any such change, equivalent substitution or improvement made within the principle of the present invention should be covered in the protection scope of the present invention.

## Claims

1. A television service playing method of a terminal, **characterized by** comprising:
the terminal obtaining a service key from a service platform;
the terminal accepting a program selection from a user; and
the terminal using the obtained service key to play a program selected by the user.

2. The method as claimed in Claim 1, **characterized in that** the step of obtaining the service key from the service platform by the terminal comprises:
the terminal starting up the television service and obtaining the service key during the startup.

3. The method as claimed in Claim 1, **characterized in that** the terminal obtains the service key from the service platform before the terminal starts up the television service.

4. The method as claimed in any one from Claim 1 to 3, **characterized in that** the step of obtaining the service key from the service platform by the terminal comprises:
the terminal obtaining a subscription relation of the user from the service platform, wherein the subscription relation comprises a corresponding relation between a service key identifier and the service key;
the terminal using the service key identifier in the subscription relation to obtain the service key corresponding to the service key identifier from the service platform; and
the terminal storing the obtained service key locally

5. The method as claimed in Claim 4, **characterized in that** the step of using the service key identifier in the subscription relation to obtain the service key corresponding to the service key identifier from the service platform by the terminal comprises:
the terminal sending a service key obtaining request message to the service platform, wherein the service key obtaining request message comprises service key identifiers of multiple television program packages and/or free television programs; and
the terminal receiving service keys of the multiple television program packages and/or free television programs corresponding to the service key identifiers of the multiple television program packages and/or free television programs sent back by the service platform.

6. The method as claimed in Claim 4, **characterized in that** after the step of storing the obtained service key locally by the terminal, the method further comprises:
for the service key with confirmation identification made by the service platform in the obtained service key, the terminal making confirmation with the service platform.

7. A terminal, **characterized by** comprising:
a service key obtaining module, configured to obtain a service key from a service platform;
an accepting module, configured to accept a program selection from a user; and
a playing module, configured to use the obtained service key to play a program selected by the user.

8. The terminal as claimed in Claim 7, **characterized by** further comprising:
a startup module, configured to start up the television service;
wherein, the service key obtaining module obtains the service key during a process that the startup module starts up the television service, or obtains the service key from the service platform before the startup module starts up the television service.

9. The terminal as claimed in Claim 7 or 8, **characterized in that** the service key obtaining module comprises:
a first obtaining unit, configured to obtain a subscription relation of the user from the service platform, wherein the subscription relation comprises a corresponding relation between a service key identifier and the service key;
a second obtaining unit, configured to use the service key identifier in the subscription relation to obtain the service key corresponding to the service key identifier from the service platform; and
a storing unit, configured to store the obtained service key locally

10. The terminal as claimed in Claim 9, **characterized in that** the second obtaining unit further comprises:
a sending subunit, configured to send a service key obtaining request message to the service platform, where the service key obtaining request message comprises service key identifiers of multiple television program packages and/or free television programs; and
a receiving subunit, configured to receive service keys of multiple television program packages and/or free television programs corresponding to the service key identifiers of multiple television program packages and/or free television programs sent back by the service platform.
